# EUROPEAN PATENT APPLICATION

(11) **EP 4 712 523 A1**
(43) Date of publication of application: **18.03.2026**
(21) Application number: 24802698.1
(22) Date of filing: 15.04.2024
(51) Int. Cl.: H04W 8/00

(54) **TRANSMITTING METHOD AND RECEIVING METHOD FOR RELAY DISCOVERY MESSAGE, TERMINAL, AND DEVICE**

(30) Priority: 11.05.2023 CN 202310532369
(71) Applicant: Datang Mobile Communications Equipment Co., Ltd., Beijing 100085 (CN)
(72) Inventor: ZHOU, Wei, Beijing 100085 (CN)
(74) Representative: Ipsilon
(86) International application number: PCT/CN2024/087741
(87) International publication number: WO 2024/230412

(57) **Abstract**

Embodiments of the present disclosure provide a transmitting method and receiving method for a relay discovery message, a terminal, and a device. The transmitting method comprises: a discoverer terminal generating a first relay discovery request message, wherein a direct discovery dataset of the first relay discovery request message comprises an identifier of the discoverer terminal and an identifier of a discoveree terminal; and transmitting the first relay discovery request message.

## Description

### CROSS-REFERENCES TO RELATED APPLICATIONS

The present application claims priority to Chinese Patent Application No. 202310532369.6 filed on May 11, 2023, entitled "Transmitting Method and Receiving Method for Relay Discovery Message, Terminal, and Device", which is hereby incorporated by reference in its entirety.

### FIELD

The present application relates to the field of radio communications, and in particular, to transmitting methods and apparatuses for relay discovery message, a receiving method and an apparatus for relay discovery message, and terminals.

### BACKGROUND

A 5th generation mobile communication (5G) proximity service (ProSe) will support a communication scenario from a terminal (also known as a user equipment, UE) to a terminal relay (U2U relay), i.e., a source UE establishes a communication connection with a target UE through a relay UE. U2U relay communication first involves that end UEs (source UE, target UE) discover each other through the relay UE, and then establish a communication connection based on this.

5G ProSe supports 2 discovery models: Model A and Model B, where for Model B, the source UE may be a discoverer UE during a discovery procedure, and the target UE may be a discoveree UE during the discovery procedure. Although U2U Model B relay discovery message procedures and main data therein have been defined, the specific implementation of the discovery procedures is a technical problem to be addressed.

### BRIEF SUMMARY

In response to problems in the prior art, embodiments of the present application provide transmitting methods and apparatuses for relay discovery message, a receiving method and an apparatus for relay discovery message, and terminals.

Embodiments of the present application provide a transmitting method for relay discovery message, performed by a discoverer terminal, including:
generating a first relay discovery solicitation message, where a direct discovery dataset of the first relay discovery solicitation message includes an identifier of the discoverer terminal and an identifier of a discoveree terminal; and
transmitting the first relay discovery solicitation message.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the first relay discovery solicitation message includes an identifier of the relay discovery security scheme.

In some embodiments, a relay discovery dataset of the first relay discovery solicitation message includes the identifier of the relay discovery security scheme.

In some embodiments, the method further includes:
receiving a first relay discovery response message transmitted from a relay terminal, where a relay discovery dataset of the first relay discovery response message includes an identifier of the relay terminal and the identifier of the discoveree terminal.

In some embodiments, in the first relay discovery response message, the identifier of the relay terminal and the identifier of the discoveree terminal are encrypted by a relay discovery key set.

In some embodiments, the first relay discovery response message includes an identifier of a relay discovery security scheme.

In some embodiments, the method further includes:
receiving a direct discovery key set and a relay discovery key set transmitted from a key management function.

Embodiments of the present application further provide a transmitting method for relay discovery message, performed by a relay terminal, including:
receiving a first relay discovery solicitation message transmitted from a discoverer terminal, where a direct discovery dataset of the first relay discovery solicitation message includes an identifier of the discoverer terminal and an identifier of a discoveree terminal;
generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and
transmitting the second relay discovery solicitation message.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In some embodiments, generating the second relay discovery solicitation message based on the first relay discovery solicitation message includes:
generating the second relay discovery solicitation message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery solicitation message includes an identifier of the relay discovery security scheme.

In some embodiments, the first relay discovery dataset includes the identifier of the relay discovery security scheme.

In some embodiments, the method further includes:
receiving a second relay discovery response message transmitted from the discoveree terminal, where a relay discovery dataset of the second relay discovery response message includes the identifier of the discoverer terminal and the identifier of the discoveree terminal;
generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
transmitting the first relay discovery response message to the discoverer terminal.

In some embodiments, in the second relay discovery response message, the identifier of the discoverer terminal and the identifier of the discoveree terminal are encrypted by a relay discovery key set.

In some embodiments, the second relay discovery response message includes an identifier of a relay discovery security scheme.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In some embodiments, the first relay discovery response message includes an identifier of a relay discovery security scheme.

In some embodiments, the second relay discovery dataset includes the identifier of the relay discovery security scheme.

In some embodiments, the method further includes:
receiving a relay discovery key set transmitted from a key management function.

Embodiments of the present application further provide a receiving method for relay discovery message, performed by a discoveree terminal, including:
receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal;
generating a second relay discovery response message based on the second relay discovery solicitation message, where a relay discovery dataset of the second relay discovery response message includes the identifier of the discoverer terminal and the identifier of the discoveree terminal; and
transmitting the second relay discovery response message to the relay terminal.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery response message includes an identifier of the relay discovery security scheme.

In some embodiments, the relay discovery dataset of the second relay discovery response message includes the identifier of the relay discovery security scheme.

In some embodiments, the method further includes:
receiving a direct discovery key set and a relay discovery key set transmitted from a key management function.

Embodiments of the present application further provide a discoverer terminal, including a memory, a transceiver, and a processor, where
the memory is used for storing a computer program; the transceiver is used for transmitting and receiving data under control of the processor; and the processor is used for reading the computer program in the memory and performing the following operations:
generating a first relay discovery solicitation message, where a direct discovery dataset of the first relay discovery solicitation message includes an identifier of the discoverer terminal and an identifier of a discoveree terminal; and
transmitting the first relay discovery solicitation message.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the first relay discovery solicitation message includes an identifier of the relay discovery security scheme.

In some embodiments, a relay discovery dataset of the first relay discovery solicitation message includes the identifier of the relay discovery security scheme.

In some embodiments, the operations further include:
receiving a first relay discovery response message transmitted from a relay terminal, where a relay discovery dataset of the first relay discovery response message includes an identifier of the relay terminal and the identifier of the discoveree terminal.

In some embodiments, in the first relay discovery response message, the identifier of the relay terminal and the identifier of the discoveree terminal are encrypted by a relay discovery key set.

In some embodiments, the first relay discovery response message includes an identifier of a relay discovery security scheme.

In some embodiments, the operations further include:
receiving a direct discovery key set and a relay discovery key set transmitted from a key management function.

Embodiments of the present application further provide a relay terminal, including a memory, a transceiver, and a processor, where
the memory is used for storing a computer program; the transceiver is used for transmitting and receiving data under control of the processor; and the processor is used for reading the computer program in the memory and performing the following operations:
receiving a first relay discovery solicitation message transmitted from a discoverer terminal, where a direct discovery dataset of the first relay discovery solicitation message includes an identifier of the discoverer terminal and an identifier of a discoveree terminal;
generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and
transmitting the second relay discovery solicitation message.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In some embodiments, generating the second relay discovery solicitation message based on the first relay discovery solicitation message includes:
generating the second relay discovery solicitation message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery solicitation message includes an identifier of the relay discovery security scheme.

In some embodiments, the first relay discovery dataset includes the identifier of the relay discovery security scheme.

In some embodiments, the operations further include:
receiving a second relay discovery response message transmitted from the discoveree terminal, where a relay discovery dataset of the second relay discovery response message includes the identifier of the discoverer terminal and the identifier of the discoveree terminal;
generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
transmitting the first relay discovery response message to the discoverer terminal.

In some embodiments, in the second relay discovery response message, the identifier of the discoverer terminal and the identifier of the discoveree terminal are encrypted by a relay discovery key set.

In some embodiments, the second relay discovery response message includes an identifier of the relay discovery security scheme.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In some embodiments, the first relay discovery response message includes an identifier of a relay discovery security scheme.

In some embodiments, the second relay discovery dataset includes the identifier of the relay discovery security scheme.

In some embodiments, the operations further include:
receiving a relay discovery key set transmitted from a key management function.

Embodiments of the present application further provide a discoveree terminal, including a memory, a transceiver, and a processor, where
the memory is used for storing a computer program; the transceiver is used for transmitting and receiving data under control of the processor; and the processor is used for reading the computer program in the memory and performing the following operations:
receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal;
generating a second relay discovery response message based on the second relay discovery solicitation message, where a relay discovery dataset of the second relay discovery response message includes the identifier of the discoverer terminal and the identifier of the discoveree terminal; and
transmitting the second relay discovery response message to the relay terminal.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for a direct discovery dataset and/or integrity protection for a relay discovery message, or not enabling integrity protection for a direct discovery dataset and integrity protection for a relay discovery message.

In some embodiments, the second relay discovery response message includes an identifier of the relay discovery security scheme.

In some embodiments, the relay discovery dataset of the second relay discovery response message includes the identifier of the relay discovery security scheme.

In some embodiments, the operations further include:
receiving a direct discovery key set and a relay discovery key set transmitted from a key management function.

Embodiments of the present application further provide a transmitting apparatus for relay discovery message, including:
a first generating unit, used for generating a first relay discovery solicitation message, where a direct discovery dataset of the first relay discovery solicitation message includes an identifier of the discoverer terminal and an identifier of a discoveree terminal; and
a first transmitting unit, used for transmitting the first relay discovery solicitation message.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the first relay discovery solicitation message includes an identifier of the relay discovery security scheme.

In some embodiments, a relay discovery dataset of the first relay discovery solicitation message includes the identifier of the relay discovery security scheme.

In some embodiments, the apparatus further includes:
a first receiving unit, used for receiving a first relay discovery response message transmitted from a relay terminal, where a relay discovery dataset of the first relay discovery response message includes an identifier of the relay terminal and the identifier of the discoveree terminal.

In some embodiments, in the first relay discovery response message, the identifier of the relay terminal and the identifier of the discoveree terminal are encrypted by a relay discovery key set.

In some embodiments, the first relay discovery response message includes an identifier of a relay discovery security scheme.

In some embodiments, the apparatus further includes:
a second receiving unit, used for receiving a direct discovery key set and a relay discovery key set transmitted from a key management function.

Embodiments of the present application further provide a transmitting apparatus for relay discovery message, including:
a third receiving unit, used for receiving a first relay discovery solicitation message transmitted from a discoverer terminal, where a direct discovery dataset of the first relay discovery solicitation message includes an identifier of the discoverer terminal and an identifier of a discoveree terminal;
a second generating unit, used for generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and
a second transmitting unit, used for transmitting the second relay discovery solicitation message.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In some embodiments, generating the second relay discovery solicitation message based on the first relay discovery solicitation message includes:
generating the second relay discovery solicitation message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery solicitation message includes an identifier of the relay discovery security scheme.

In some embodiments, the first relay discovery dataset includes the identifier of the relay discovery security scheme.

In some embodiments, the third receiving unit is further used for receiving a second relay discovery response message transmitted from the discoveree terminal, where a relay discovery dataset of the second relay discovery response message includes the identifier of the discoverer terminal and the identifier of the discoveree terminal;
the second generating unit is further used for generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
the second transmitting unit is further used for transmitting the first relay discovery response message to the discoverer terminal.

In some embodiments, in the second relay discovery response message, the identifier of the discoverer terminal and the identifier of the discoveree terminal are encrypted by a relay discovery key set.

In some embodiments, the second relay discovery response message includes an identifier of the relay discovery security scheme.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In some embodiments, the first relay discovery response message includes an identifier of a relay discovery security scheme.

In some embodiments, the second relay discovery dataset includes the identifier of the relay discovery security scheme.

In some embodiments, the third receiving unit is further used for:
receiving a relay discovery key set transmitted from a key management function.

Embodiments of the present application further provide a receiving apparatus for relay discovery message, including:
a fourth receiving unit, used for receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal;
a third generating unit, used for generating a second relay discovery response message based on the second relay discovery solicitation message, where a relay discovery dataset of the second relay discovery response message includes the identifier of the discoverer terminal and the identifier of the discoveree terminal; and
a third transmitting unit, used for transmitting the second relay discovery response message to the relay terminal.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery response message includes an identifier of the relay discovery security scheme.

In some embodiments, the relay discovery dataset of the second relay discovery response message includes the identifier of the relay discovery security scheme.

In some embodiments, the fourth receiving unit is further used for:
receiving a direct discovery key set and a relay discovery key set transmitted from a key management function.

Embodiments of the present application further provide a computer-readable storage medium storing a computer program, where the computer program is used to cause a computer to perform the transmitting methods for relay discovery message or the receiving method for relay discovery message described above.

Embodiments of the present application further provide a communication device storing a computer program, where the computer program is used to cause the communication device to perform the transmitting methods for relay discovery message or the receiving method for relay discovery message described above.

Embodiments of the present application further provide a processor-readable storage medium storing a computer program, where the computer program is used to cause a processor to perform the transmitting methods for relay discovery message or the receiving method for relay discovery message described above.

Embodiments of the present application further provide a chip product storing a computer program, where the computer program is used to cause the chip product to perform the transmitting methods for relay discovery message or the receiving method for relay discovery message described above.

In the transmitting methods and apparatuses for relay discovery message, a receiving method and an apparatus for relay discovery message, and terminals provided in embodiments of the present application, the identifier of the discoverer terminal and the identifier of the discoveree terminal are included in the direct discovery dataset of the first relay discovery solicitation message for transmission, which not only specifically defines a way in which terminal information is provided to the relay terminal during the relay discovery procedure, to specifically implement the relay discovery procedure, but also facilitates the security management of terminal information during the relay discovery procedure.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a first schematic flowchart of a transmitting method for relay discovery message according to an embodiment of the present application;
FIG. 2 is an example diagram of a first relay discovery solicitation message according to an embodiment of the present application;
FIG. 3 is an example diagram of a first relay discovery response message according to an embodiment of the present application;
FIG. 4 is a second schematic flowchart of a transmitting method for relay discovery message according to an embodiment of the present application;
FIG. 5 is an example diagram of a second relay discovery solicitation message according to an embodiment of the present application;
FIG. 6 is an example diagram of a second relay discovery response message according to an embodiment of the present application;
FIG. 7 is a flowchart of a receiving method for relay discovery message according to an embodiment of the present application;
FIG. 8 is a schematic diagram of basic procedures for relay discovery Model B according to an embodiment of the present application;
FIG. 9 is a schematic structural diagram of a discoverer terminal according to an embodiment of the present application;
FIG. 10 is a schematic structural diagram of a relay terminal according to an embodiment of the present application;
FIG. 11 is a schematic structural diagram of a discoveree terminal according to an embodiment of the present application;
FIG. 12 is a first schematic structural diagram of a transmitting apparatus for relay discovery message according to an embodiment of the present application;
FIG. 13 is a second schematic structural diagram of a transmitting apparatus for relay discovery message according to an embodiment of the present application; and
FIG. 14 is a schematic structural diagram of a receiving apparatus for relay discovery message according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The terms "first", "second", etc. in embodiments of the present application are used to distinguish similar objects and are not used to describe a specific order or sequence. It should be understood that the terms used in this way may be interchanged in appropriate circumstances. The embodiments of the present application may be implemented in order other than those illustrated or described herein, and the objects distinguished by "first" and "second" are usually of the same class, without limiting the number of objects. For example, the first object may be one or multiple.

A clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

To facilitate a clearer understanding of the technical solutions of the various embodiments of the present application, first, some technical contents associated with various embodiments of the present application will be introduced.

### 1. 5th generation mobile communication (5G) proximity service (ProSe) discovery model

### 5G ProSe supports 2 discovery models.

Model A: an announcing user equipment (UE) transmits an announcement discovery message to announce its existence, and a monitoring UE does not need to reply in case of receiving the announcement discovery message. The monitoring UE may establish a communication connection with the announcement UE as needed.

Model B: a discoverer UE actively transmits a discovery solicitation message to search for a discoveree UE, and the discoveree UE needs to reply to the discoverer UE upon receiving. Then, the discoverer UE establishes a communication connection with the discovered UE.

5G ProSe will support a UE to UE relay (U2U relay) communication scenario, i.e., a source UE establishes a communication connection with a target UE through a relay UE. U2U relay communication first involves that end UEs (source UE, target UE) discover each other through the relay UE, and then establish a communication connection based on this. In the relay communication scenario, the source UE may be the monitoring UE or discoverer UE during discovery procedure, and the target UE may be the announcing UE or discoveree UE during discovery procedure.

The U2U relay discovery message includes two parts: data needed for interaction between the source UE/target UE and the relay UE, which is called a relay discovery dataset; data needed for interaction between the source UE and the target UE, which is called a direct discovery dataset.

### 2. Explanation of relevant terms

Discoverer UE: a source UE in the ProSe Model B discovery procedure, which will broadcast a broadcast message to discover a discoveree UE. After discovering the discoveree UE, the discoverer UE will initiate communications with the discoveree UE.

Discoveree UE: a target UE in the ProSe Model B discovery procedure, which responds to the discovery message broadcast by the discoverer UE, to let the discoverer UE know its existence.

Relay UE: in U2U relay communications, it is located between the source UE and the target UE, forwarding their discovery messages. After receiving the discovery solicitation or response message from the source UE/target UE, the relay UE performs corresponding processing to generate a new discovery message and transmits to a receiving UE of the message.

End UE: a UE for which the relay UE may provide relay services, namely the discoverer UE and the discoveree UE in Model B.

Relay service code (RSC): used to identify a specific relay service.

Message integrity code (MIC): used to protect integrity of a message.

ProSe query code: a code included in the ProSe Model B discovery solicitation message, which is associated with a ProSe application and a ProSe user. Part of the content of the ProSe query code is used for the receiving UE to monitor identifier information of the message transmitted from the sending UE, and this part of the content is not encrypted; another part of the content may be associated with privacy and needs to be encrypted. A key for protection of the direct discovery dataset is associated with the ProSe query code.

ProSe response code: a code included in the ProSe Model B discovery response message, which serves as a response code to the ProSe query code. The security handling for ProSe response code is similar to the security handling for ProSe query code. A key for protection of the direct discovery dataset is associated with the ProSe response code.

A universal time coordinated (UTC)-based counter least significant bit (UTC-based counter LSB): a time parameter associated with the key set of a protection discovery message. The UTC-based counter LSB is used to allow a clock of a transmitter and a clock of a receiver to have a certain degree of asynchrony, but must be within a specified range of this value, to avoid possible replay attacks.

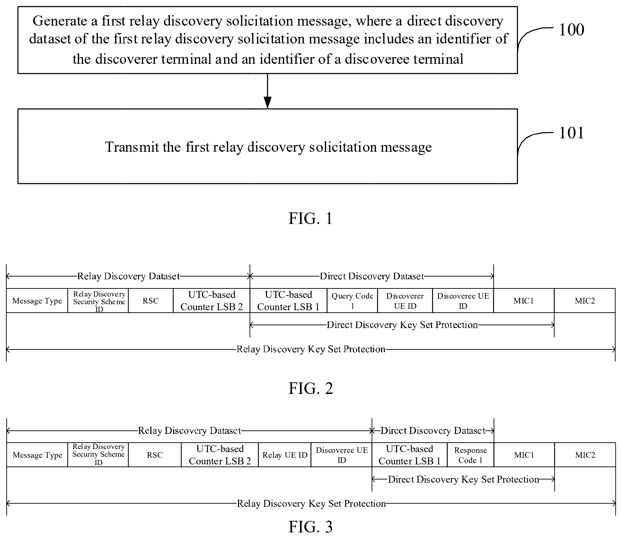

FIG. 1 is a first schematic flowchart of a transmitting method for relay discovery message according to an embodiment of the present application. The method may be performed by a discoverer terminal. As shown in FIG. 1, the method includes the following steps:
step 100: generating a first relay discovery solicitation message, where a direct discovery dataset of the first relay discovery solicitation message includes an identifier of the discoverer terminal and an identifier of a discoveree terminal; and
step 101: transmitting the first relay discovery solicitation message.

In an embodiment, embodiments of the present application provide a transmitting method for relay discovery message for the discovery Model B described earlier, where the relay discovery message may refer to various messages during discovery procedure in relay communication scenarios, such as: a relay discovery solicitation message transmitted from a discoverer UE to a relay UE (a UE-to-UE relay discovery solicitation message), a relay discovery solicitation message transmitted from a relay UE to a discoveree UE (a UE-to-UE relay discovery solicitation message), etc.

For a discoverer UE, it may first generate a first relay discovery solicitation message, which includes an identifier of the discoverer UE (discoverer UE ID) and an identifier of the discoveree UE (discoveree UE ID), where the identifier of the discoverer UE and the identifier of the discoveree UE are included in the direct discovery dataset of the first relay discovery solicitation message.

In some embodiments, the identifier of the discoverer UE may be a layer-2 ID of the discoverer UE or other identifier information.

In some embodiments, the identifier of the discoveree UE may be a layer-2 ID of the discoveree UE or other identifier information.

After generating the first relay discovery solicitation message, the discoverer UE may transmit the first relay discovery solicitation message, such as broadcasting the first relay discovery solicitation message, and the relay UE may receive the first relay discovery solicitation message.

In the transmitting method for relay discovery message provided in embodiments of the present application, the identifier of the discoverer UE and the identifier of the discoveree UE are included in the direct discovery dataset of the first relay discovery solicitation message for transmission, which not only specifically defines a way in which terminal information is provided to the relay UE during the relay discovery procedure, to specifically implement the relay discovery procedure, but also facilitates the security management of terminal information during the relay discovery procedure.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In an embodiment, in case of generating the first relay discovery solicitation message, the discoverer UE may also perform corresponding security processing such as encryption and integrity protection on the first relay discovery solicitation message. For example, encrypting the identifier of the discoverer UE and the identifier of the discoveree UE using a direct discovery key set, protecting the integrity of the direct discovery dataset of the first relay discovery solicitation message using a direct discovery key set, protecting the integrity of the first relay discovery solicitation message using a relay discovery key set, etc.

The direct discovery key set refers to a key set for protection of the direct discovery dataset between the discoverer UE and the discoveree UE. The direct discovery key set includes a key providing confidentiality protection, a key providing integrity protection, and an information scrambling key. The protection technology scheme may adopt a symmetric key technology, where a key value of the message transmitter is the same as a key value of the message receiver.

The relay discovery key set refers to a key set for protection of relay discovery messages among the discoverer UE, the discoveree UE, and the relay UE. The relay discovery key set includes a key providing confidentiality protection, a key providing integrity protection, and an information scrambling key. The protection technology scheme may adopt a symmetric key technology, where a key value of the message transmitter is the same as a key value of the message receiver.

In some embodiments, the method further includes:
receiving a direct discovery key set and a relay discovery key set transmitted from a key management function.

In an embodiment, the key management function may provide the direct discovery key set and the relay discovery key set to the discoverer UE. The discoverer UE may use the corresponding key set to protect the transmitted relay discovery message, or to verify and decrypt subsequent received relay discovery messages.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In an embodiment, the relay discovery security scheme may be provided by a key management function or other devices to the discoverer UE, or may be pre-configured in the discoverer UE, and the present application does not make specific limitations on this.

The relay discovery security scheme may include a combination of one or more of the following:
(1) using a direct discovery key set and/or a relay discovery key set to protect the relay discovery message, or not using a direct discovery key set and a relay discovery key set to protect the relay discovery message;
(2) enabling end terminal privacy protection and/or relay terminal privacy protection, or not enabling end terminal privacy protection and relay terminal privacy protection,
   where enabling end terminal privacy protection may include encrypting the identifiers of the end terminals (discoverer UE and discoveree UE), and enabling relay terminal privacy protection may include encrypting the identifier of the relay UE; or
(3) enabling integrity protection for a direct discovery dataset and/or integrity protection for a relay discovery message, or not enabling integrity protection for a direct discovery dataset and integrity protection for a relay discovery message,
where enabling integrity protection for the direct discovery dataset may include using a direct discovery key set to protect the integrity of the direct discovery dataset, and enabling integrity protection for a relay discovery message may include using a relay discovery key set to protect the integrity of the relay discovery message.

In the procedure of U2U relay discovery, different application scenarios have different requirements for the security protection strength of relay discovery messages, such as: the computing and energy capabilities of Internet of things (IoT) devices may be limited, requiring only basic security capabilities or not using security capabilities. This means that the system needs to be able to flexibly control the message protection security mechanisms adopted.

In some embodiments, the key management function may provide a relay discovery security policy used for performing relay discovery to the discoverer UE, the discoveree UE, and the relay UE. Multiple relay discovery security schemes and their identifiers (security scheme IDs) may be included in the relay discovery security policy. Each security scheme describes a security policy for relay discovery messages, such as: only using the relay discovery key set to protect the relay discovery message; using both the direct discovery key set and the relay discovery key set to protect the relay discovery message; whether to enable privacy protection for the end UE; whether to enable privacy protection for the relay UE; whether to enable privacy protection for both the end UE and the relay UE; whether to enable integrity protection for the direct discovery dataset; or whether to enable integrity protection for the relay discovery message, etc.

In case of generating the first relay discovery solicitation message, the discoverer UE may perform corresponding security processing based on the relay discovery security scheme, such as: encrypting the identifier of the discoverer UE and the identifier of the discoveree UE using a direct discovery key set; generating the MIC for the direct discovery dataset of the first relay discovery solicitation message using the direct discovery key set; or generating the MIC for the first relay discovery solicitation message using the relay discovery key set, etc. Thus, the security mechanisms adopted may be flexibly controlled based on application requirements.

In some embodiments, the first relay discovery solicitation message may include an identifier of the relay discovery security scheme. That is, the discoverer UE may carry the identifier of the relay discovery security scheme (security scheme ID) in the first relay discovery solicitation message and transmit to the relay UE. The relay UE may search for the locally stored security scheme based on the security scheme ID in the message, then verify and decrypt the received message based on the security scheme described in the security scheme, and perform corresponding security processing on the subsequently generated messages based on the scheme.

In some embodiments, the identifier of the relay discovery security scheme may be included in the relay discovery dataset of the first relay discovery solicitation message for the relay UE to obtain.

FIG. 2 is an example diagram of a first relay discovery solicitation message according to an embodiment of the present application. It should be understood that this figure is only an example of a specific structural form of the first relay discovery solicitation message and does not constitute a limitation on the first relay discovery solicitation message described in various embodiments of the present application. As shown in FIG. 2, the first relay discovery solicitation message includes the identifier of the relay discovery security scheme (security scheme ID). The discoverer UE ID and discoveree UE ID are included in the direct discovery dataset and encrypted by the direct discovery key set. Integrity of the direct discovery dataset is protected by the direct discovery key set. Integrity of the first relay discovery solicitation message, consisting of the relay discovery dataset and the direct discovery dataset, is protected by the relay discovery key set.

In FIG. 2, UTC-based counter LSB 2 is a time parameter associated with the relay discovery key set, UTC-based counter LSB 1 is a time parameter associated with the direct discovery key set, MIC1 is a MIC generated using the direct discovery key set, MIC2 is a MIC generated using the relay discovery key set, and query code 1 is a ProSe query code used for the direct discovery procedure between the discoverer UE and the discoveree UE. The meanings of the relevant concepts mentioned in the subsequent figures will remain consistent throughout the text and will not be repeated.

In some embodiments, the method further includes:
receiving a first relay discovery response message transmitted from a relay terminal, where a relay discovery dataset of the first relay discovery response message includes an identifier of the relay terminal and the identifier of the discoveree terminal.

In an embodiment, after receiving the first relay discovery solicitation message transmitted from the discoverer UE, the relay UE may generate a second relay discovery solicitation message based on the first relay discovery solicitation message, and then transmit the second relay discovery solicitation message. After receiving the second relay discovery solicitation message, the discoveree UE may return a second relay discovery response message (UE-to-UE relay discovery response message) to the relay UE. The relay UE may return the first relay discovery response message to the discoverer UE. The description of the second relay discovery solicitation message and the second relay discovery response message is seen in the following, which is not repeated here.

In the first relay discovery response message returned by the relay UE to the discoverer UE, the identifier of the relay UE (relay UE ID) and the identifier of the discoveree UE (discoveree UE ID) are included, and the identifier of the relay UE and the identifier of the discoveree UE are included in the relay discovery dataset of the first relay discovery response message.

In some embodiments, the identifier of the relay UE may be a layer-2 ID of the relay UE or other identifier information.

In some embodiments, in the first relay discovery response message, the identifier of the relay terminal and the identifier of the discoveree terminal are encrypted by the relay discovery key set.

In an embodiment, in case of generating the first relay discovery response message, the relay UE may also use the relay discovery key set to encrypt the identifier of the relay UE and the identifier of the discoveree UE.

In some embodiments, the first relay discovery response message includes an identifier of the relay discovery security scheme.

In an embodiment, in case of generating the first relay discovery response message, the relay UE may perform corresponding security processing such as encryption and integrity protection based on the relay discovery security scheme. The relay UE may carry the used identifier of the relay discovery security scheme (security scheme ID) in the first relay discovery response message and transmit to the discoverer UE.

FIG. 3 is an example diagram of a first relay discovery response message according to an embodiment of the present application. It should be understood that this figure is only an example of a specific structural form of the first relay discovery response message, and does not constitute a limitation on the first relay discovery response message described in various embodiments of the present application. As shown in FIG. 3, the first relay discovery response message includes the identifier of the relay discovery security scheme (security scheme ID). The relay UE ID and the discoveree UE ID are included in the relay discovery dataset generated by the relay UE and encrypted by the relay discovery key set. Integrity of the first relay discovery response message, consisting of a relay discovery dataset and a direct discovery dataset of the second relay discovery response message, is protected by the relay discovery key set.

In FIG. 3, response code 1 is a ProSe response code used for the direct discovery procedure between the discoverer UE and the discoveree UE, which corresponds to query code 1. The meanings of the relevant concepts mentioned in the subsequent figures will remain consistent throughout the text and will not be repeated.

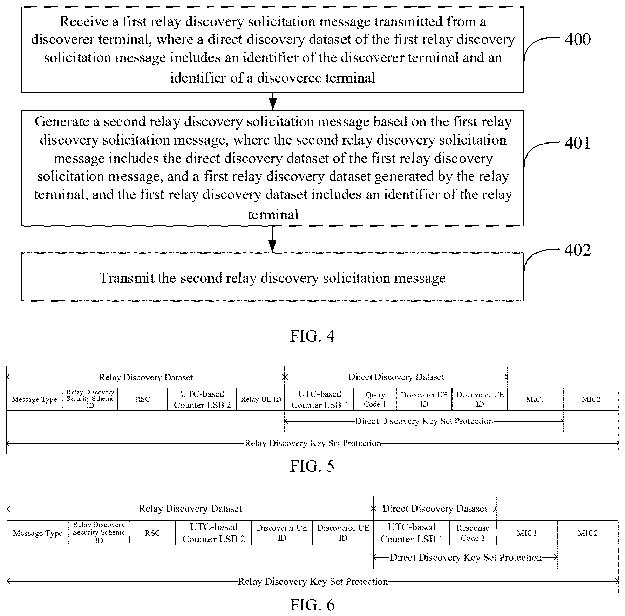

FIG. 4 is a second schematic flowchart of a transmitting method for relay discovery message according to an embodiment of the present application. The method may be performed by a relay terminal. As shown in FIG. 4, the method includes the following steps:
step 400: receiving a first relay discovery solicitation message transmitted from a discoverer terminal, where a direct discovery dataset of the first relay discovery solicitation message includes an identifier of the discoverer terminal and an identifier of a discoveree terminal;
step 401: generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and
step 402: transmitting the second relay discovery solicitation message.

In an embodiment, for the Model B relay discovery procedure, the discoverer UE first generates a first relay discovery solicitation message, which includes the identifier of the discoverer UE (discoverer UE ID) and the identifier of the discoveree UE (discoveree UE ID). The identifier of the discoverer UE and the identifier of the discoveree UE are included in the direct discovery dataset of the first relay discovery solicitation message.

After the discoverer UE transmits the first relay discovery solicitation message, the relay UE receives the first relay discovery solicitation message. The relay UE may generate a second relay discovery solicitation message based on the first relay discovery solicitation message, and the second relay discovery solicitation message includes two parts: one part is the direct discovery dataset carried in the first relay discovery solicitation message, and the other part is the first relay discovery dataset generated by the relay UE. The identifier of the relay UE (relay UE ID) is included in the first relay discovery dataset.

After generating the second relay discovery solicitation message, the relay UE may transmit the second relay discovery solicitation message, for example, broadcasting the second relay discovery solicitation message. The discoveree UE may receive the second relay discovery solicitation message.

In the transmitting method for relay discovery message provided in embodiments of the present application, the identifier of the discoverer UE and the identifier of the discoveree UE are included in the direct discovery dataset of the first relay discovery solicitation message for transmission, and the second relay discovery solicitation message generated by the relay UE includes the direct discovery dataset of the first relay discovery solicitation message. The identifier of the relay UE is included in the relay discovery dataset of the second relay discovery solicitation message for transmission, which not only specifically defines a way in which terminal information is provided during the relay discovery procedure, to specifically implement the relay discovery procedure, but also facilitates the security management of terminal information during the relay discovery procedure.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In an embodiment, in case of generating the second relay discovery solicitation message, the relay UE may also perform corresponding security processing such as encryption and integrity protection on the second relay discovery solicitation message. For example, the identifier of the relay UE is encrypted using a relay discovery key set, the integrity of the second relay discovery solicitation message is protected using a relay discovery key set, etc.

In some embodiments, the method further includes:
receiving a relay discovery key set transmitted from a key management function.

In an embodiment, the relay discovery key set may be provided to the relay UE by the key management function. The relay UE may use the relay discovery key set to verify and decrypt the received relay discovery messages, or to protect the subsequently transmitted relay discovery messages.

In some embodiments, generating the second relay discovery response message based on the second relay discovery solicitation message includes:
generating the second relay discovery solicitation message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In an embodiment, the discoverer UE may indicate the relay discovery security scheme through the first relay discovery solicitation message, for example: including the identifier of the relay discovery security scheme in the first relay discovery solicitation message.

After receiving the first relay discovery solicitation message, the relay UE may perform corresponding security processing in case of generating the second relay discovery solicitation message based on the relay discovery security scheme indicated in the first relay discovery solicitation message, such as: encrypting the identifier of the relay UE using the relay discovery key set, protecting the integrity of the second relay discovery solicitation message using the relay discovery key set, etc. Thus, flexible control of adopted security mechanisms based on application requirements may be achieved.

In some embodiments, the key management function may provide a relay discovery security policy used for performing relay discovery to the discoverer UE, the discoveree UE, and the relay UE. Multiple relay discovery security schemes and their identifiers (security scheme IDs) may be included in the relay discovery security policy. Each security scheme describes a security policy for relay discovery messages, such as: only using the relay discovery key set to protect the relay discovery message; using both the direct discovery key set and the relay discovery key set to protect the relay discovery message; whether to enable privacy protection for the end UE; whether to enable privacy protection for the relay UE; whether to enable privacy protection for both the end UE and the relay UE; whether to enable integrity protection for the direct discovery dataset; or whether to enable integrity protection for the relay discovery message, etc. Different relay discovery security schemes are pre-configured in the UE through the relay discovery security policy. The relay discovery message carries an identifier of a specific relay discovery security scheme (security scheme ID). The receiver searches for the locally stored security scheme based on the security scheme ID in the message, then verifies and decrypts the received message based on the security scheme described in the security scheme, and performs corresponding security processing on the subsequently generated messages (relay forwarding messages or response messages, etc.) based on this scheme.

In some embodiments, the second relay discovery solicitation message may include an identifier of the relay discovery security scheme.

In an embodiment, in case of generating a second relay discovery solicitation message, the relay UE may include the identifier of the relay discovery security scheme (security scheme ID) it uses in the second relay discovery solicitation message. The discoveree UE receiving the second relay discovery solicitation message may search for the locally stored security scheme based on the security scheme ID in the message, then verify and decrypt the received messages based on the security scheme described in the security scheme, and perform corresponding security processing on subsequent generated messages based on the scheme.

In some embodiments, the identifier of the relay discovery security scheme may be included in the first relay discovery dataset.

FIG. 5 is an example diagram of a second relay discovery solicitation message according to an embodiment of the present application. It should be understood that this figure is only an example of a specific structural form of the second relay discovery solicitation message and does not constitute a limitation on the second relay discovery solicitation message described in various embodiments of the present application. As shown in FIG. 5, the second relay discovery solicitation message includes an identifier of the relay discovery security scheme (security scheme ID). The relay UE ID is included in the relay discovery dataset generated by the relay UE and encrypted by the relay discovery key set. Integrity of the second relay discovery solicitation message, consisting of a relay discovery dataset and a direct discovery dataset of the first relay discovery response message, is protected by the relay discovery key set.

In some embodiments, the method further includes:
receiving a second relay discovery response message transmitted from the discoveree terminal, where a relay discovery dataset of the second relay discovery response message includes the identifier of the discoverer terminal and the identifier of the discoveree terminal;
generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
transmitting the first relay discovery response message to the discoverer terminal.

In an embodiment, after the relay UE transmits the second relay discovery solicitation message, the discoveree UE receives the second relay discovery solicitation message. The discoveree UE may generate a second relay discovery response message based on the second relay discovery solicitation message and transmit to the relay UE. The second relay discovery response message includes the discoverer UE ID and the discoveree UE ID, and the discoverer UE ID and the discoveree UE ID are included in the relay discovery dataset of the second relay discovery response message.

After receiving the second relay discovery response message, the relay UE may generate the first relay discovery response message and transmit to the discoverer UE based on the second relay discovery response message. In the first relay discovery response message returned by the relay UE to the discoverer UE, the relay UE ID and the discoveree UE ID are included. The relay UE ID and the discoveree UE ID are included in the relay discovery dataset of the first relay discovery response message. The first relay discovery response message also includes the direct discovery dataset of the second relay discovery response message.

In some embodiments, in the second relay discovery response message, the identifier of the discoverer terminal and the identifier of the discoveree terminal are encrypted by the relay discovery key set.

In an embodiment, in case of generating the second relay discovery response message, the discoveree UE may also use the relay discovery key set to encrypt the discoverer UE ID and the discoveree UE ID, for information verification and decryption by the relay UE.

In some embodiments, the second relay discovery response message includes an identifier of the relay discovery security scheme.

In an embodiment, in case of generating the second relay discovery response message, the discoveree UE may perform corresponding security processing such as encryption and integrity protection based on the relay discovery security scheme. The discoveree UE may carry the identifier of the used relay discovery security scheme (security scheme ID) in the second relay discovery response message and transmit to the relay UE.

FIG. 6 is an example diagram of a second relay discovery response message according to an embodiment of the present application. It should be understood that this figure is only an example of a specific structural form of the second relay discovery response message and does not constitute a limitation on the second relay discovery response message described in various embodiments of the present application. As shown in FIG. 6, the second relay discovery response message includes an identifier of the relay discovery security scheme (security scheme ID). The discoverer UE ID and the discoveree UE ID are included in the relay discovery dataset and encrypted by the relay discovery key set. Integrity of the direct discovery dataset is protected by the direct discovery key set. Integrity of the second relay discovery response message, consisting of a relay discovery dataset and a direct discovery dataset, is protected by the relay discovery key set.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In an embodiment, in case of generating the first relay discovery response message, the relay UE may also perform corresponding security processing such as encryption and integrity protection on the first relay discovery response message. For example, the relay UE ID and the discoveree UE ID are encrypted using a relay discovery key set, the integrity of the first relay discovery response message is protected using a relay discovery key set, etc.

In some embodiments, the first relay discovery response message may include an identifier of the relay discovery security scheme.

In an embodiment, in case of generating the first relay discovery response message, the relay UE may include the identifier of the relay discovery security scheme (security scheme ID) it uses in the first relay discovery response message. The discoverer UE receiving the first relay discovery response message may search for the locally stored security scheme based on the security scheme ID in the message, and then verify and decrypt the received messages based on the security scheme described in the security scheme.

In some embodiments, the identifier of the relay discovery security scheme may be included in the second relay discovery dataset.

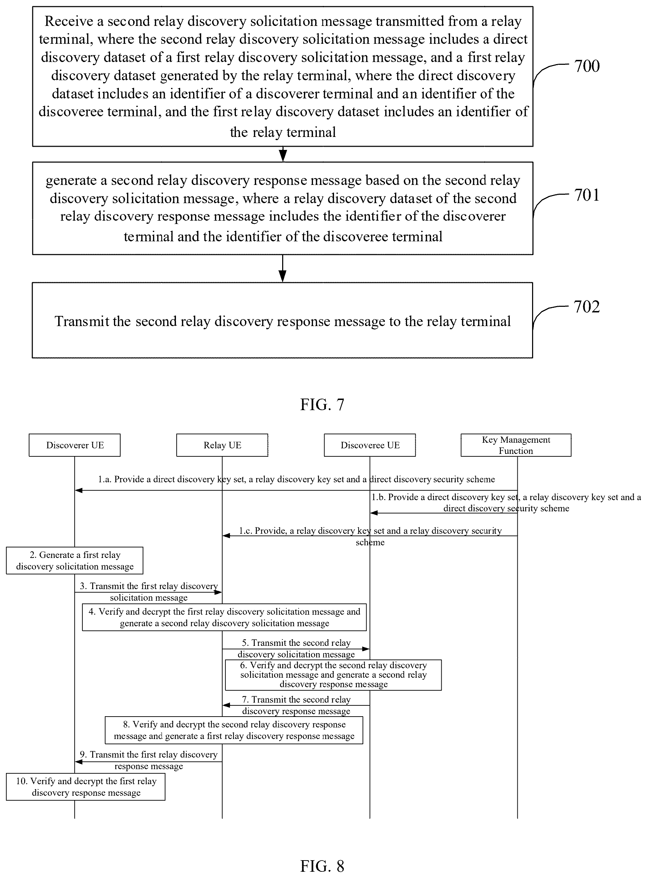

FIG. 7 is a flowchart of a receiving method for relay discovery message according to an embodiment of the present application. The method may be performed by a discoveree terminal. As shown in FIG. 7, the method includes the following steps:
step 700: receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal;
step 701: generating a second relay discovery response message based on the second relay discovery solicitation message, where a relay discovery dataset of the second relay discovery response message includes the identifier of the discoverer terminal and the identifier of the discoveree terminal; and
step 702: transmitting the second relay discovery response message to the relay terminal.

In an embodiment, for the Model B relay discovery procedure, the discoverer UE first generates a first relay discovery solicitation message, which includes the identifier of the discoverer UE (discoverer UE ID) and the identifier of the discoveree UE (discoveree UE ID). The identifier of the discoverer UE and the identifier of the discoveree UE are included in the direct discovery dataset of the first relay discovery solicitation message.

After the discoverer UE transmits the first relay discovery solicitation message, the relay UE receives the first relay discovery solicitation message. The relay UE may generate a second relay discovery solicitation message based on the first relay discovery solicitation message, and the second relay discovery solicitation message includes two parts: one part is the direct discovery dataset carried in the first relay discovery solicitation message, and the other part is the first relay discovery dataset generated by the relay UE. The identifier of the relay UE (relay UE ID) is included in the first relay discovery dataset.

After the relay UE transmits the second relay discovery solicitation message, the discoveree UE receives the second relay discovery solicitation message. The discoveree UE may generate a second relay discovery response message based on the second relay discovery solicitation message and transmit to the relay UE. The second relay discovery response message includes the discoverer UE ID and the discoveree UE ID. The discoverer UE ID and the discoveree UE ID are included in the relay discovery dataset of the second relay discovery response message.

In the transmitting method for relay discovery message provided in embodiments of the present application, the identifier of the discoverer UE and the identifier of the discoveree UE are included in the relay discovery dataset of the second relay discovery response message and transmitted to the relay UE, which not only specifically defines a way in which terminal information is provided during the relay discovery procedure, to specifically implement the relay discovery procedure, but also facilitates the security management of terminal information during the relay discovery procedure.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In an embodiment, in case of generating the second relay discovery response message, the discoveree UE may also perform corresponding security processing such as encryption and integrity protection on the second relay discovery response message. For example, the identifier of the discoverer UE and the identifier of the discoveree UE are encrypted using a relay discovery key set, the integrity of the direct discovery dataset in the second relay discovery response message is protected using a direct discovery key set, and the integrity of the second relay discovery response message is protected using a relay discovery key set, etc.

In some embodiments, the method further includes:
receiving a direct discovery key set and a relay discovery key set transmitted from a key management function.

In an embodiment, the key management function may provide the direct discovery key set and the relay discovery key set to the discoveree UE. The discoveree UE may use the corresponding key set to verify and decrypt the received relay discovery messages, or protect the subsequently transmitted relay discovery messages.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In an embodiment, the relay UE may indicate the relay discovery security scheme through a second relay discovery solicitation message, such as: including the identifier of the relay discovery security scheme in the second relay discovery solicitation message.

After receiving the second relay discovery solicitation message, the discoveree UE may perform corresponding security processing in case of generating the second relay discovery response message based on the relay discovery security scheme indicated in the second relay discovery solicitation message, such as: encrypting the identifier of the discoverer UE and the identifier of the discoveree UE using a relay discovery key set, protecting the integrity of the direct discovery dataset in the second relay discovery response message using a direct discovery key set, and protecting the integrity of the second relay discovery response message using a relay discovery key set, etc. Thus, flexible control of adopted security mechanisms based on application requirements may be achieved.

In some embodiments, the key management function may provide the relay discovery security policy used for performing relay discovery to the discoverer UE, the discoveree UE, and relay UE. Multiple relay discovery security schemes and their identifiers (security scheme IDs) may be included in the relay discovery security policy. Each security scheme describes a security policy for relay discovery messages, such as: only using the relay discovery key set to protect the relay discovery message; using both the direct discovery key set and the relay discovery key set to protect the relay discovery message; whether to enable privacy protection for the end UE; whether to enable privacy protection for the relay UE; whether to enable privacy protection for both the end UE and the relay UE; whether to enable integrity protection for the direct discovery dataset; or whether to enable integrity protection for the relay discovery message, etc. Different relay discovery security schemes are pre-configured in the UE through the relay discovery security policy. The relay discovery message carries an identifier of a specific relay discovery security scheme (security scheme ID). The receiver searches for the locally stored security scheme based on the security scheme ID in the message, then verifies and decrypts the received message based on the security scheme described in the security scheme, and performs corresponding security processing on the subsequently generated messages (relay forwarding messages or response messages, etc.) based on this scheme.

In some embodiments, the second relay discovery response message includes an identifier of the relay discovery security scheme.

In an embodiment, in case of generating a second relay discovery response message, the discoveree UE may include the identifier of the relay discovery security scheme (security scheme ID) it uses in the second relay discovery response message. The relay UE receiving the second relay discovery response message may search for the locally stored security scheme based on the security scheme ID in the message, then verify and decrypt the received messages based on the security scheme described in the security scheme, and perform corresponding security processing on subsequent generated messages based on the scheme.

In some embodiments, the identifier of the relay discovery security scheme is included in the relay discovery dataset of the second relay discovery response message.

The methods provided in each embodiment of the present application are based on the same application concept, so the implementation of each method may refer to each other, and the repetition will not be repeated.

The following examples illustrate the methods provided in the above embodiments of the present application through specific application scenarios.

### Example I: relay discovery Model B security processing flow

FIG. 8 is a schematic diagram of basic procedures for relay discovery Model B according to an embodiment of the present application. As shown in FIG. 8, the main procedures include the following.
1. A key management function provides a direct discovery key set and associated usage parameters to a discoverer UE and a discoveree UE.

The key management function provides the relay discovery key set and associated usage parameters to the discoverer UE, the discoveree UE, and a relay UE. The relay discovery key set is associated with an RSC.

The key management function may provide a relay discovery security policy used during relay discovery to the discoverer UE, the discoveree UE, and the relay UE. The relay discovery security policy is associated with the RSC. The relay discovery security policy may include multiple relay discovery security schemes and their identifiers (security scheme IDs). Each security scheme describes a security policy for relay discovery messages, such as: only using the relay discovery key set to protect the relay discovery message; using both the direct discovery key set and the relay discovery key set to protect the relay discovery message; whether to enable privacy protection for the end UE; whether to enable privacy protection for the relay UE; whether to enable privacy protection for both the end UE and the relay UE; whether to enable integrity protection for the direct discovery dataset; or whether to enable integrity protection for the relay discovery message, etc. Different relay discovery security schemes are pre-configured in the UE through the relay discovery security policy. The relay discovery message carries an identifier of a specific relay discovery security scheme (security scheme ID). The receiver searches for the locally stored security scheme based on the security scheme ID in the message, then verifies and decrypts the received message based on the security scheme described in the security scheme, and performs corresponding security processing on the subsequently generated messages (relay forwarding messages or response messages, etc.) based on this scheme.

2. The discoverer UE selects a security scheme, generates the first relay discovery solicitation message, and provides security protection for the message based on the security scheme. The first relay discovery solicitation message includes both the direct discovery dataset and the relay discovery dataset, as well as the security scheme ID that describes the security scheme used in the relay discovery message. The discoverer UE ID and the discoveree UE ID are included in the direct discovery dataset. If the security scheme specifies enabling end UE privacy security, the discoverer UE ID and the discoveree UE ID are encrypted by the encryption key in the direct discovery key set. Based on the provisions of the security scheme, the discoverer UE uses a direct discovery key set to provide further protection for the direct discovery dataset, and uses a relay discovery key set to provide further protection for the relay discovery dataset and the first relay discovery solicitation message.

3. The discoverer UE transmits the first relay discovery solicitation message.

4. The relay UE receives the first relay discovery solicitation message, uses the security scheme ID in the message to obtain the locally stored security scheme, and then verifies and decrypts the first relay discovery solicitation message transmitted from the discoverer UE based on the security scheme described in the security scheme.

The relay UE generates a second relay discovery solicitation message. The second relay discovery solicitation message includes the relay discovery dataset generated by the relay UE, the direct discovery dataset of the first relay discovery solicitation message, and the security scheme ID from the first relay discovery solicitation message. The relay UE ID is included in the relay discovery dataset. If the security scheme specifies enabling relay UE privacy security, the relay UE ID is encrypted by the encryption key in the relay discovery key set. Based on the provisions of the security scheme, the relay UE uses a relay discovery key set to provide further protection for the relay discovery dataset and the second relay discovery solicitation message.

5. The relay UE transmits a second relay discovery solicitation message.

6. The discoveree UE receives the second relay discovery solicitation message, uses the security scheme ID in the message to obtain the locally stored security scheme, and then verifies and decrypts the second relay discovery solicitation message transmitted from the relay UE based on the security scheme described in the security scheme.

The discoveree UE generates a second relay discovery response message. The second relay discovery response message includes its generated direct discovery dataset and relay discovery dataset, and the security scheme ID from the second relay discovery solicitation message. The discoverer UE ID and the discoveree UE ID are included in the relay discovery dataset. If the security scheme specifies enabling UE privacy security, the discoverer UE ID and the discoveree UE ID are encrypted by the encryption key in the relay discovery key set. Based on the provisions of the security scheme, the discoveree UE uses a direct discovery key set to provide further protection for the direct discovery dataset, and uses a relay discovery key set to provide further protection for the relay discovery dataset and the second relay discovery response message.

7. The discoveree UE transmits a second relay discovery response message.

8. The relay UE receives the second relay discovery response message, uses the security scheme ID in the message to obtain the locally stored security scheme, and then verifies and decrypts the second relay discovery response message transmitted from the discoveree UE based on the security scheme described in the security scheme.

The relay UE generates a first relay discovery response message. The first relay discovery response message includes the relay discovery dataset generated by the relay UE, the direct discovery dataset of the second relay discovery response message, and the security scheme ID from the second relay discovery response message. The relay UE ID and the discoveree UE ID are included in the relay discovery dataset. If the security scheme specifies enabling relay UE privacy security, the relay UE ID and the discoveree UE ID are encrypted by the encryption key in the relay discovery key set. Based on the provisions of the security scheme, the relay UE uses a relay discovery key set to provide further protection for the relay discovery dataset and the first relay discovery response message.

9. The relay UE transmits the first relay discovery response message.

10. The discoverer UE receives the first relay discovery response message, uses the security scheme ID in the message to obtain the locally stored security scheme, and then verifies and decrypts the first relay discovery response message transmitted from relay UE based on the security scheme described in the security scheme, and performs subsequent operations.

The methods and apparatuses provided in each embodiment of the present application are based on the same application concept. As the principles of problem-solving by the methods and apparatuses are similar, the implementation of the apparatuses and methods may be referred to each other, and repetition will not be repeated.

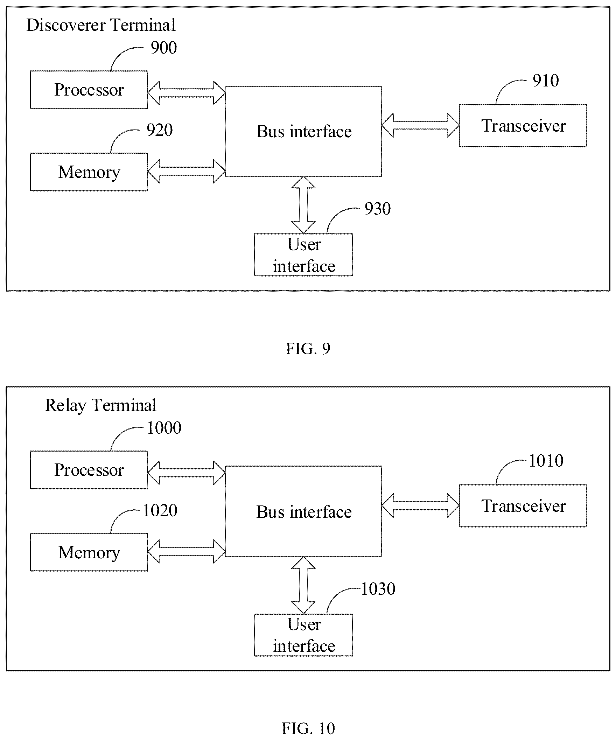

FIG. 9 is a schematic structural diagram of a discoverer terminal according to an embodiment of the present application. As shown in FIG. 9, the discoverer terminal includes a memory 920, a transceiver 910, and a processor 900, where the processor 900 and the memory 920 may also be arranged physically separately.

The memory 920 is used for storing a computer program, and the transceiver 910 is used for receiving and transmitting data under control of the processor 900.

In an embodiment, the transceiver 910 is used to receive and transmit data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, which are well known in the art, and therefore will not be further described in the present application. The bus interface provides an interface. The transceiver 910 may include multiple elements, i.e., a transmitter and a receiver, units for providing communication with various other devices over transmission media including wireless channels, wired channels, fiber optic cables, and the like. For different user equipment, a user interface 930 may be an interface capable of externally or internally connecting the required device, and the connected device includes, but not limited to, a keypad, a display, a speaker, a microphone, a joystick, and the like.

The processor 900 is responsible for managing the bus architecture and general processing, and the memory 920 may store data used by the processor 900 when performing operations.

The processor 400 may be a central processing unit (CPU), an application specific integrated circuit (ASIC), a field-programmable gate array (FPGA), or a complex programmable logic device (CPLD). The processor may also use a multi-core architecture.

The processor 900 calls the computer program stored in the memory 920 to perform any of the methods provided in embodiments of the present application according to the obtained executable instructions, such as: generating a first relay discovery solicitation message, where a direct discovery dataset of the first relay discovery solicitation message includes an identifier of the discoverer terminal and an identifier of a discoveree terminal; and transmitting the first relay discovery solicitation message.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the first relay discovery solicitation message includes an identifier of the relay discovery security scheme.

In some embodiments, a relay discovery dataset of the first relay discovery solicitation message includes the identifier of the relay discovery security scheme.

In some embodiments, the method further includes:
receiving a first relay discovery response message transmitted from a relay terminal, where a relay discovery dataset of the first relay discovery response message includes an identifier of the relay terminal and the identifier of the discoveree terminal.

In some embodiments, in the first relay discovery response message, the identifier of the relay terminal and the identifier of the discoveree terminal are encrypted by a relay discovery key set.

In some embodiments, the first relay discovery response message includes an identifier of the relay discovery security scheme.

In some embodiments, the method further includes:
receiving a direct discovery key set and a relay discovery key set transmitted from a key management function.

FIG. 10 is a schematic structural diagram of a relay terminal according to an embodiment of the present application. As shown in FIG. 10, the relay terminal includes a memory 1020, a transceiver 1010, and a processor 1000, where the processor 1000 and the memory 1020 may also be arranged physically separately.

The memory 1020 is used for storing a computer program, and the transceiver 1010 is used for receiving and transmitting data under control of the processor 1000.

In an embodiment, the transceiver 1010 is used to receive and transmit data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, which are well known in the art, and therefore will not be further described in the present application. The bus interface provides an interface. The transceiver 1010 may include multiple elements, i.e., a transmitter and a receiver, units for providing communication with various other devices over transmission media including wireless channels, wired channels, fiber optic cables, and the like. For different user equipment, a user interface 1030 may be an interface capable of externally or internally connecting the required device, and the connected device includes, but not limited to, a keypad, a display, a speaker, a microphone, a joystick, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic device (CPLD). The processor may also use a multi-core architecture.

The processor 1000 calls the computer program stored in the memory 1020 to perform any of the methods provided in embodiments of the present application according to the obtained executable instructions, such as: receiving a first relay discovery solicitation message transmitted from a discoverer terminal, where a direct discovery dataset of the first relay discovery solicitation message includes an identifier of the discoverer terminal and an identifier of a discoveree terminal; generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and transmitting the second relay discovery solicitation message.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In some embodiments, generating the second relay discovery solicitation message based on the first relay discovery solicitation message includes:
generating the second relay discovery solicitation message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery solicitation message includes an identifier of the relay discovery security scheme.

In some embodiments, the first relay discovery dataset includes the identifier of the relay discovery security scheme.

In some embodiments, the method further includes:
receiving a second relay discovery response message transmitted from the discoveree terminal, where a relay discovery dataset of the second relay discovery response message includes the identifier of the discoverer terminal and the identifier of the discoveree terminal;
generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
transmitting the first relay discovery response message to the discoverer terminal.

In some embodiments, in the second relay discovery response message, the identifier of the discoverer terminal and the identifier of the discoveree terminal are encrypted by a relay discovery key set.

In some embodiments, the second relay discovery response message includes an identifier of the relay discovery security scheme.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In some embodiments, the first relay discovery response message includes an identifier of a relay discovery security scheme.

In some embodiments, the second relay discovery dataset includes the identifier of the relay discovery security scheme.

In some embodiments, the method further includes:
receiving a relay discovery key set transmitted from a key management function.

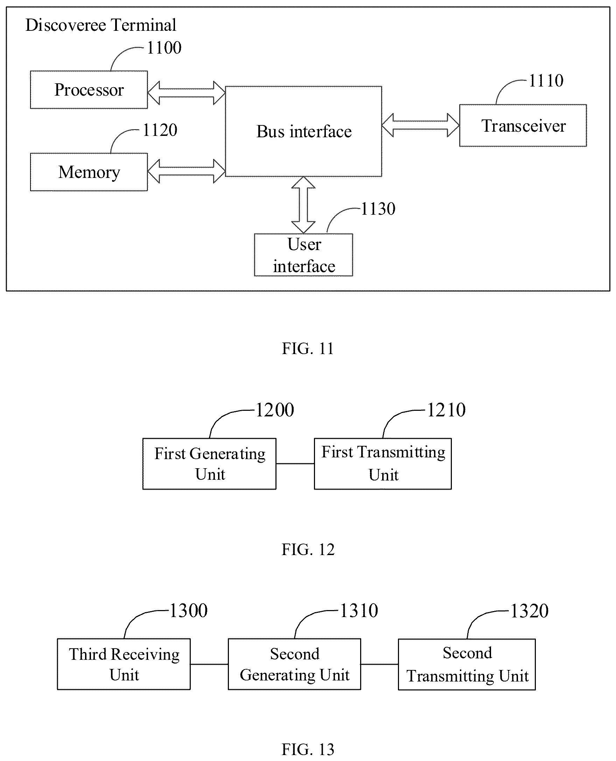

FIG. 11 is a schematic diagram of the structure of the discoveree terminal provided in embodiments of the present application. As shown in FIG. 11, the discoveree terminal includes a memory 1120, a transceiver 1110, and a processor 1100, where the processor 1100 and the memory 1120 may also be arranged physically separately.

The memory 1120 is used for storing a computer program, and the transceiver 1110 is used for receiving and transmitting data under control of the processor 1100.

In an embodiment, the transceiver 1110 is used to receive and transmit data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, which are well known in the art, and therefore will not be further described in the present application. The bus interface provides an interface. The transceiver 1110 may include multiple elements, i.e., a transmitter and a receiver, units for providing communication with various other devices over transmission media including wireless channels, wired channels, fiber optic cables, and the like. For different user equipment, a user interface 1130 may be an interface capable of externally or internally connecting the required device, and the connected device includes, but not limited to, a keypad, a display, a speaker, a microphone, a joystick, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field-programmable gate array (FPGA), or a complex programmable logic device (CPLD). The processor may also use a multi-core architecture.

The processor 1100 calls the computer program stored in the memory 1120 to perform any of the methods provided in embodiments of the present application according to the obtained executable instructions, such as: receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal; generating a second relay discovery response message based on the second relay discovery solicitation message, where a relay discovery dataset of the second relay discovery response message includes the identifier of the discoverer terminal and the identifier of the discoveree terminal; and transmitting the second relay discovery response message to the relay terminal.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery response message includes an identifier of the relay discovery security scheme.

In some embodiments, the relay discovery dataset of the second relay discovery response message includes an identifier of the relay discovery security scheme.

In some embodiments, the method further includes:
receiving a direct discovery key set and a relay discovery key set transmitted from a key management function.

It should be noted that the above-mentioned discoverer terminal, relay terminal, and discoverer terminal provided in embodiments of the present application may implement all the method steps implemented in the above-mentioned method embodiments and achieve the same technical effects. Therefore, specific descriptions of the same parts and beneficial effects as the method embodiments in this embodiment will not be repeated here.

FIG. 12 is a first schematic structural diagram of a transmitting apparatus for relay discovery message according to an embodiment of the present application. As shown in FIG. 12, the apparatus includes:
a first generating unit 1200, used for generating a first relay discovery solicitation message, where a direct discovery dataset of the first relay discovery solicitation message includes an identifier of the discoverer terminal and an identifier of a discoveree terminal; and
a first transmitting unit 1210, used for transmitting the first relay discovery solicitation message.

In some embodiments, generating the first relay discovery solicitation message includes one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

In some embodiments, generating the first relay discovery solicitation message includes:
generating the first relay discovery solicitation message based on a relay discovery security scheme,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the first relay discovery solicitation message includes an identifier of the relay discovery security scheme.

In some embodiments, the relay discovery dataset of the first relay discovery solicitation message includes the identifier of the relay discovery security scheme.

In some embodiments, the apparatus further includes:
a first receiving unit, used for receiving a first relay discovery response message transmitted from a relay terminal, where a relay discovery dataset of the first relay discovery response message includes an identifier of the relay terminal and the identifier of the discoveree terminal.

In some embodiments, in the first relay discovery response message, the identifier of the relay terminal and the identifier of the discoveree terminal are encrypted by a relay discovery key set.

In some embodiments, the first relay discovery response message includes an identifier of a relay discovery security scheme.

In some embodiments, the apparatus further includes:
a second receiving unit, used for receiving a direct discovery key set and a relay discovery key set transmitted from a key management function.

FIG. 13 is a second schematic structural diagram of a transmitting apparatus for relay discovery message according to an embodiment of the present application. As shown in FIG. 13, the apparatus includes:
a third receiving unit 1300, used for receiving a first relay discovery solicitation message transmitted from a discoverer terminal, where a direct discovery dataset of the first relay discovery solicitation message includes an identifier of the discoverer terminal and an identifier of a discoveree terminal;
a second generating unit 1310, used for generating a second relay discovery solicitation message based on the first relay discovery solicitation message, where the second relay discovery solicitation message includes the direct discovery dataset of the first relay discovery solicitation message, and a first relay discovery dataset generated by the relay terminal, and the first relay discovery dataset includes an identifier of the relay terminal; and
a second transmitting unit 1320, used for transmitting the second relay discovery solicitation message.

In some embodiments, generating the second relay discovery solicitation message includes one or more of the following:
encrypting the identifier of the relay terminal using a relay discovery key set; or
generating a message integrity code (MIC) for the second relay discovery solicitation message using a relay discovery key set.

In some embodiments, generating the second relay discovery response message based on the first relay discovery solicitation message includes:
generating the second relay discovery response message based on a relay discovery security scheme indicated in the first relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery solicitation message includes an identifier of the relay discovery security scheme.

In some embodiments, the first relay discovery dataset includes the identifier of the relay discovery security scheme.

In some embodiments, the third receiving unit is further used for receiving a second relay discovery response message transmitted from the discoveree terminal, where a relay discovery dataset of the second relay discovery response message includes the identifier of the discoverer terminal and the identifier of the discoveree terminal;
the second generating unit is further used for generating a first relay discovery response message based on the second relay discovery response message, where the first relay discovery response message includes a direct discovery dataset of the second relay discovery response message, and a second relay discovery dataset generated by the relay terminal, and the second relay discovery dataset includes the identifier of the relay terminal and the identifier of the discoveree terminal; and
the second transmitting unit is further used for transmitting the first relay discovery response message to the discoverer terminal.

In some embodiments, in the second relay discovery response message, the identifier of the discoverer terminal and the identifier of the discoveree terminal are encrypted by a relay discovery key set.

In some embodiments, the second relay discovery response message includes an identifier of the relay discovery security scheme.

In some embodiments, generating the first relay discovery response message includes one or more of the following:
encrypting the identifier of the relay terminal and the identifier of the discoveree terminal using a relay discovery key set; or
generating a MIC for the first relay discovery response message using a relay discovery key set.

In some embodiments, the first relay discovery response message includes an identifier of a relay discovery security scheme.

In some embodiments, the second relay discovery dataset includes the identifier of the relay discovery security scheme.

In some embodiments, the third receiving unit is further used for:
receiving a relay discovery key set transmitted from a key management function.

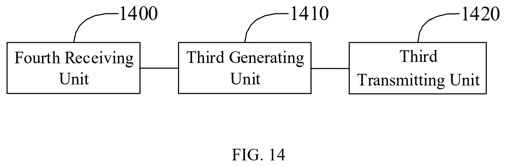

FIG. 14 is a schematic structural diagram of a receiving apparatus for relay discovery message according to an embodiment of the present application. As shown in FIG. 14, the apparatus includes:
a fourth receiving unit 1400, used for receiving a second relay discovery solicitation message transmitted from a relay terminal, where the second relay discovery solicitation message includes a direct discovery dataset of a first relay discovery solicitation message, and a first relay discovery dataset generated by the relay terminal, where the direct discovery dataset includes an identifier of a discoverer terminal and an identifier of the discoveree terminal, and the first relay discovery dataset includes an identifier of the relay terminal;
a third generating unit 1410, used for generating a second relay discovery response message based on the second relay discovery solicitation message, where a relay discovery dataset of the second relay discovery response message includes the identifier of the discoverer terminal and the identifier of the discoveree terminal; and
a third transmitting unit 1420, used for transmitting the second relay discovery response message to the relay terminal.

In some embodiments, generating the second relay discovery response message includes one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

In some embodiments, generating the second relay discovery response message based on the second relay discovery solicitation message includes:
generating the second relay discovery response message based on a relay discovery security scheme indicated in the second relay discovery solicitation message,
where the relay discovery security scheme includes one or more of the following:
   using a direct discovery key set and/or a relay discovery key set to protect a relay discovery message, or not using a direct discovery key set and a relay discovery key set to protect a relay discovery message;
   enabling end terminal privacy protection and/or relay terminal privacy protection, or not enabling end terminal privacy protection and relay terminal privacy protection; or
   enabling integrity protection for the direct discovery dataset and/or integrity protection for a relay discovery message, or not enabling integrity protection for the direct discovery dataset and integrity protection for a relay discovery message.

In some embodiments, the second relay discovery response message includes an identifier of the relay discovery security scheme.

In some embodiments, the relay discovery dataset of the second relay discovery response message includes an identifier of the relay discovery security scheme.

In some embodiments, the fourth receiving unit is further used for:
receiving a direct discovery key set and a relay discovery key set transmitted from a key management function.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted that the above-mentioned apparatus provided in embodiments of the present application may achieve all the method steps implemented in the above-mentioned method embodiment, and may achieve the same technical effects. Therefore, specific descriptions of the same parts and beneficial effects as the method embodiment in this embodiment will not be repeated here.

Embodiments of the present application further provide a computer-readable storage medium, where the computer-readable storage medium stores a computer program for causing a computer to perform the transmitting method for relay discovery message provided in the above embodiments.

It should be noted that the computer-readable storage medium provided in embodiments of the present application may implement all the method steps implemented in the above method embodiments and achieve the same technical effects. Therefore, the same parts and beneficial effects as the method embodiments in this embodiment will not be specifically described here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer-usable storage medium (including but not limited to disk storage and optical storage) containing computer usable program code

The present application is described with reference to flow charts and/or block diagrams of methods, device (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A transmitting method for relay discovery message, performed by a discoverer terminal, comprising:
generating a first relay discovery solicitation message, wherein a direct discovery dataset of the first relay discovery solicitation message comprises an identifier of the discoverer terminal and an identifier of a discoveree terminal; and
transmitting the first relay discovery solicitation message.

2. The transmitting method of claim 1, wherein generating the first relay discovery solicitation message comprises one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

3. The transmitting method of claim 1 or 2, wherein generating the first relay discovery solicitation message comprises:
generating the first relay discovery solicitation message based on a relay discovery security scheme,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

4. The transmitting method of claim 3, wherein the first relay discovery solicitation message comprises an identifier of the relay discovery security scheme.

5. The transmitting method of claim 4, wherein a relay discovery dataset of the first relay discovery solicitation message comprises the identifier of the relay discovery security scheme.

6. The transmitting method of claim 1, further comprising:
receiving a first relay discovery response message transmitted from a relay terminal, wherein a relay discovery dataset of the first relay discovery response message comprises an identifier of the relay terminal and the identifier of the discoveree terminal.

7. The transmitting method of claim 6, wherein in the first relay discovery response message, the identifier of the relay terminal and the identifier of the discoveree terminal are encrypted by a relay discovery key set.

8. The transmitting method of claim 6 or 7, wherein the first relay discovery response message comprises an identifier of a relay discovery security scheme.

9. The transmitting method of claim 1 or 2, further comprising:
receiving a direct discovery key set and a relay discovery key set transmitted from a key management function.

10. A transmitting method for relay discovery message, performed by a relay terminal, comprising:
receiving a first relay discovery solicitation message transmitted from a discoverer terminal, wherein a direct discovery dataset of the first relay discovery solicitation message comprises an identifier of the discoverer terminal and an identifier of a discoveree terminal;
generating a second relay discovery solicitation message based on the first relay discovery solicitation message, wherein the second relay discovery solicitation message comprises the direct discovery dataset of the first relay discovery solicitation message, and a first relay discovery dataset generated by the relay terminal, and the first relay discovery dataset comprises an identifier of the relay terminal; and
transmitting the second relay discovery solicitation message.

11. The transmitting method of claim 10, wherein generating the second relay discovery solicitation message comprises one or more of the following:
encrypting the identifier of the relay terminal using a relay discovery key set; or
generating a message integrity code (MIC) for the second relay discovery solicitation message using a relay discovery key set.

12. The transmitting method of claim 10 or 11, wherein generating the second relay discovery solicitation message based on the first relay discovery solicitation message comprises:
generating the second relay discovery solicitation message based on a relay discovery security scheme indicated in the first relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

13. The transmitting method of claim 12, wherein the second relay discovery solicitation message comprises an identifier of the relay discovery security scheme.

14. The transmitting method of claim 13, wherein the first relay discovery dataset comprises the identifier of the relay discovery security scheme.

15. The transmitting method of claim 10, further comprising:
receiving a second relay discovery response message transmitted from the discoveree terminal, wherein a relay discovery dataset of the second relay discovery response message comprises the identifier of the discoverer terminal and the identifier of the discoveree terminal;
generating a first relay discovery response message based on the second relay discovery response message, wherein the first relay discovery response message comprises a direct discovery dataset of the second relay discovery response message, and a second relay discovery dataset generated by the relay terminal, and the second relay discovery dataset comprises the identifier of the relay terminal and the identifier of the discoveree terminal; and
transmitting the first relay discovery response message to the discoverer terminal.

16. The transmitting method of claim 15, wherein in the second relay discovery response message, the identifier of the discoverer terminal and the identifier of the discoveree terminal are encrypted by a relay discovery key set.

17. The transmitting method of claim 15 or 16, wherein the second relay discovery response message comprises an identifier of a relay discovery security scheme.

18. The transmitting method of claim 15, wherein generating the first relay discovery response message comprises one or more of the following:
encrypting the identifier of the relay terminal and the identifier of the discoveree terminal using a relay discovery key set; or
generating a message integrity code (MIC) for the first relay discovery response message using a relay discovery key set.

19. The transmitting method of claim 15 or 18, wherein the first relay discovery response message comprises an identifier of a relay discovery security scheme.

20. The transmitting method of claim 19, wherein the second relay discovery dataset comprises the identifier of the relay discovery security scheme.

21. The transmitting method of claim 10 or 11, further comprising:
receiving a relay discovery key set transmitted from a key management function.

22. A receiving method a relay discovery message, performed by a discoveree terminal, comprising:
receiving a second relay discovery solicitation message transmitted from a relay terminal, wherein the second relay discovery solicitation message comprises a direct discovery dataset of a first relay discovery solicitation message, and a first relay discovery dataset generated by the relay terminal, wherein the direct discovery dataset comprises an identifier of a discoverer terminal and an identifier of the discoveree terminal, and the first relay discovery dataset comprises an identifier of the relay terminal;
generating a second relay discovery response message based on the second relay discovery solicitation message, wherein a relay discovery dataset of the second relay discovery response message comprises the identifier of the discoverer terminal and the identifier of the discoveree terminal; and
transmitting the second relay discovery response message to the relay terminal.

23. The receiving method of claim 22, wherein generating the second relay discovery response message comprises one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

24. The receiving method of claim 22 or 23, wherein generating the second relay discovery response message based on the second relay discovery solicitation message comprises:
generating the second relay discovery response message based on a relay discovery security scheme indicated in the second relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

25. The receiving method of claim 24, wherein the second relay discovery response message comprises an identifier of the relay discovery security scheme.

26. The receiving method of claim 25, wherein the relay discovery data set of the second relay discovery response message comprises the identifier of the relay discovery security scheme.

27. The receiving method of claim 22 or 23, further comprising:
receiving a direct discovery key set and a relay discovery key set transmitted from a key management function.

28. A discoverer terminal, comprising a memory, a transceiver, and a processor, wherein
the memory is used for storing a computer program; the transceiver is used for transmitting and receiving data under control of the processor; and the processor is used for reading the computer program in the memory and performing the following operations:
generating a first relay discovery solicitation message, wherein a direct discovery dataset of the first relay discovery solicitation message comprises an identifier of the discoverer terminal and an identifier of a discoveree terminal; and
transmitting the first relay discovery solicitation message.

29. The discoverer terminal of claim 28, wherein generating the first relay discovery solicitation message comprises one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

30. The discoverer terminal of claim 28 or 29, wherein generating the first relay discovery solicitation message comprises:
generating the first relay discovery solicitation message based on a relay discovery security scheme,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

31. The discoverer terminal of claim 30, wherein the first relay discovery solicitation message comprises an identifier of the relay discovery security scheme.

32. The discoverer terminal of claim 31, wherein a relay discovery dataset of the first relay discovery solicitation message comprises the identifier of the relay discovery security scheme.

33. The discoverer terminal of claim 28, wherein the operations further comprise:
receiving a first relay discovery response message transmitted from a relay terminal, wherein a relay discovery dataset of the first relay discovery response message comprises an identifier of the relay terminal and the identifier of the discoveree terminal.

34. The discoverer terminal of claim 33, wherein in the first relay discovery response message, the identifier of the relay terminal and the identifier of the discoveree terminal are encrypted by a relay discovery key set.

35. The discoverer terminal of claim 33 or 34, wherein the first relay discovery response message comprises an identifier of a relay discovery security scheme.

36. The discoverer terminal of claim 28 or 29, wherein the operations further comprise:
receiving a direct discovery key set and a relay discovery key set transmitted from a key management function.

37. A relay terminal, comprising a memory, a transceiver, and a processor, wherein
the memory is used for storing a computer program; the transceiver is used for transmitting and receiving data under control of the processor; and the processor is used for reading the computer program in the memory and performing the following operations:
receiving a first relay discovery solicitation message transmitted from a discoverer terminal, wherein a direct discovery dataset of the first relay discovery solicitation message comprises an identifier of the discoverer terminal and an identifier of a discoveree terminal;
generating a second relay discovery solicitation message based on the first relay discovery solicitation message, wherein the second relay discovery solicitation message comprises the direct discovery dataset of the first relay discovery solicitation message, and a first relay discovery dataset generated by the relay terminal, and the first relay discovery dataset comprises an identifier of the relay terminal; and
transmitting the second relay discovery solicitation message.

38. The relay terminal of claim 37, wherein generating the second relay discovery solicitation message comprises one or more of the following:
encrypting the identifier of the relay terminal using a relay discovery key set; or
generating a message integrity code (MIC) for the second relay discovery solicitation message using a relay discovery key set.

39. The relay terminal of claim 37 or 38, wherein generating the second relay discovery solicitation message based on the first relay discovery solicitation message comprises:
generating the second relay discovery solicitation message based on a relay discovery security scheme indicated in the first relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

40. The relay terminal of claim 39, wherein the second relay discovery solicitation message comprises an identifier of the relay discovery security scheme.

41. The relay terminal of claim 40, wherein the first relay discovery dataset comprises the identifier of the relay discovery security scheme.

42. The relay terminal of claim 37, wherein the operations further comprise:
receiving a second relay discovery response message transmitted from the discoveree terminal, wherein a relay discovery dataset of the second relay discovery response message comprises the identifier of the discoverer terminal and the identifier of the discoveree terminal;
generating a first relay discovery response message based on the second relay discovery response message, wherein the first relay discovery response message comprises a direct discovery dataset of the second relay discovery response message, and a second relay discovery dataset generated by the relay terminal, and the second relay discovery dataset comprises the identifier of the relay terminal and the identifier of the discoveree terminal; and
transmitting the first relay discovery response message to the discoverer terminal.

43. The relay terminal of claim 42, wherein in the second relay discovery response message, the identifier of the discoverer terminal and the identifier of the discoveree terminal are encrypted by a relay discovery key set.

44. The relay terminal of claim 42 or 43, wherein the second relay discovery response message comprises an identifier of a relay discovery security scheme.

45. The relay terminal of claim 42, wherein generating the first relay discovery response message comprises one or more of the following:
encrypting the identifier of the relay terminal and the identifier of the discoveree terminal using a relay discovery key set; or
generating a message integrity code (MIC) for the first relay discovery response message using a relay discovery key set.

46. The relay terminal of claim 42 or 45, wherein the first relay discovery response message comprises an identifier of a relay discovery security scheme.

47. The relay terminal of claim 46, wherein the second relay discovery dataset comprises the identifier of the relay discovery security scheme.

48. The relay terminal of claim 37 or 38, wherein the operations further comprise:
receiving a relay discovery key set transmitted from a key management function.

49. A discoveree terminal, comprising a memory, a transceiver, and a processor, wherein
the memory is used for storing a computer program; the transceiver is used for transmitting and receiving data under control of the processor; and the processor is used for reading the computer program in the memory and performing the following operations:
receiving a second relay discovery solicitation message transmitted from a relay terminal, wherein the second relay discovery solicitation message comprises a direct discovery dataset of a first relay discovery solicitation message, and a first relay discovery dataset generated by the relay terminal, wherein the direct discovery dataset comprises an identifier of a discoverer terminal and an identifier of the discoveree terminal, and the first relay discovery dataset comprises an identifier of the relay terminal;
generating a second relay discovery response message based on the second relay discovery solicitation message, wherein a relay discovery dataset of the second relay discovery response message comprises the identifier of the discoverer terminal and the identifier of the discoveree terminal; and
transmitting the second relay discovery response message to the relay terminal.

50. The discoveree terminal of claim 49, wherein generating the second relay discovery response message comprises one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

51. The discoveree terminal of claim 49 or 50, wherein generating the second relay discovery response message based on the second relay discovery solicitation message comprises:
generating the second relay discovery response message based on a relay discovery security scheme indicated in the second relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

52. The discoveree terminal of claim 51, wherein the second relay discovery response message comprises an identifier of the relay discovery security scheme.

53. The discoveree terminal of claim 52, wherein the relay discovery data set of the second relay discovery response message comprises the identifier of the relay discovery security scheme.

54. The discoveree terminal of claim 49 or 50, wherein the operations further comprise:
receiving a direct discovery key set and a relay discovery key set transmitted from a key management function.

55. A transmitting apparatus for relay discovery message, comprising:
a first generating unit, used for generating a first relay discovery solicitation message, wherein a direct discovery dataset of the first relay discovery solicitation message comprises an identifier of the discoverer terminal and an identifier of a discoveree terminal; and
a first transmitting unit, used for transmitting the first relay discovery solicitation message.

56. The transmitting apparatus of claim 55, wherein generating the first relay discovery solicitation message comprises one or more of the following:
encrypting the identifier of the discoverer terminal and the identifier of the discoveree terminal using a direct discovery key set;
generating a message integrity code (MIC) for the direct discovery dataset of the first relay discovery solicitation message using a direct discovery key set; or
generating a message integrity code (MIC) for the first relay discovery solicitation message using a relay discovery key set.

57. The transmitting apparatus of claim 55 or 56, wherein generating the first relay discovery solicitation message comprises:
generating the first relay discovery solicitation message based on a relay discovery security scheme,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

58. The transmitting apparatus of claim 57, wherein the first relay discovery solicitation message comprises an identifier of the relay discovery security scheme.

59. The transmitting apparatus of claim 58, wherein a relay discovery dataset of the first relay discovery solicitation message comprises the identifier of the relay discovery security scheme.

60. The transmitting apparatus of claim 55, wherein the apparatus further comprises:
a first receiving unit, used for receiving a first relay discovery response message transmitted from a relay terminal, wherein a relay discovery dataset of the first relay discovery response message comprises an identifier of the relay terminal and the identifier of the discoveree terminal.

61. The transmitting apparatus of claim 60, wherein in the first relay discovery response message, the identifier of the relay terminal and the identifier of the discoveree terminal are encrypted by a relay discovery key set.

62. The transmitting apparatus of claim 60 or 61, wherein the first relay discovery response message comprises an identifier of a relay discovery security scheme.

63. The transmitting apparatus of claim 55 or 56, wherein the apparatus further comprises:
a second receiving unit, used for receiving a direct discovery key set and a relay discovery key set transmitted from a key management function.

64. A transmitting apparatus for relay discovery message, comprising:
a third receiving unit, used for receiving a first relay discovery solicitation message transmitted from a discoverer terminal, wherein a direct discovery dataset of the first relay discovery solicitation message comprises an identifier of the discoverer terminal and an identifier of a discoveree terminal;
a second generating unit, used for generating a second relay discovery solicitation message based on the first relay discovery solicitation message, wherein the second relay discovery solicitation message comprises the direct discovery dataset of the first relay discovery solicitation message, and a first relay discovery dataset generated by the relay terminal, and the first relay discovery dataset comprises an identifier of the relay terminal; and
a second transmitting unit, used for transmitting the second relay discovery solicitation message.

65. The transmitting apparatus of claim 64, wherein generating the second relay discovery solicitation message comprises one or more of the following:
encrypting the identifier of the relay terminal using a relay discovery key set; or
generating a message integrity code (MIC) for the second relay discovery solicitation message using a relay discovery key set.

66. The transmitting apparatus of claim 64 or 65, wherein generating the second relay discovery solicitation message based on the first relay discovery solicitation message comprises:
generating the second relay discovery solicitation message based on a relay discovery security scheme indicated in the first relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

67. The transmitting apparatus of claim 66, wherein the second relay discovery solicitation message comprises an identifier of the relay discovery security scheme.

68. The transmitting apparatus of claim 67, wherein the first relay discovery dataset comprises the identifier of the relay discovery security scheme.

69. The transmitting apparatus of claim 64, wherein the third receiving unit is further used for: receiving a second relay discovery response message transmitted from the discoveree terminal, wherein a relay discovery dataset of the second relay discovery response message comprises the identifier of the discoverer terminal and the identifier of the discoveree terminal;
the second generating unit is further used for: generating a first relay discovery response message based on the second relay discovery response message, wherein the first relay discovery response message comprises a direct discovery dataset of the second relay discovery response message, and a second relay discovery dataset generated by the relay terminal, and the second relay discovery dataset comprises the identifier of the relay terminal and the identifier of the discoveree terminal; and
the second transmitting unit is further used for: transmitting the first relay discovery response message to the discoverer terminal.

70. The transmitting apparatus of claim 69, wherein in the second relay discovery response message, the identifier of the discoverer terminal and the identifier of the discoveree terminal are encrypted by a relay discovery key set.

71. The transmitting apparatus of claim 69 or 70, wherein the second relay discovery response message comprises an identifier of a relay discovery security scheme.

72. The transmitting apparatus of claim 69, wherein generating the first relay discovery response message comprises one or more of the following:
encrypting the identifier of the relay terminal and the identifier of the discoveree terminal using a relay discovery key set; or
generating a message integrity code (MIC) for the first relay discovery response message using a relay discovery key set.

73. The transmitting apparatus of claim 69 or 72, wherein the first relay discovery response message comprises an identifier of a relay discovery security scheme.

74. The transmitting apparatus of claim 73, wherein the second relay discovery dataset comprises the identifier of the relay discovery security scheme.

75. The transmitting apparatus of claim 64 or 65, wherein the third receiving unit is further used for:
receiving a relay discovery key set transmitted from a key management function.

76. A receiving apparatus for relay discovery message, comprising:
a fourth receiving unit, used for receiving a second relay discovery solicitation message transmitted from a relay terminal, wherein the second relay discovery solicitation message comprises a direct discovery dataset of a first relay discovery solicitation message, and a first relay discovery dataset generated by the relay terminal, wherein the direct discovery dataset comprises an identifier of a discoverer terminal and an identifier of the discoveree terminal, and the first relay discovery dataset comprises an identifier of the relay terminal;
a third generating unit, used for generating a second relay discovery response message based on the second relay discovery solicitation message, wherein a relay discovery dataset of the second relay discovery response message comprises the identifier of the discoverer terminal and the identifier of the discoveree terminal; and
a third transmitting unit, used for transmitting the second relay discovery response message to the relay terminal.

77. The receiving apparatus of claim 76, wherein generating the second relay discovery response message comprises one or more of the following:
encrypting the identifier of the discoverer terminal and the identifier of the discoveree terminal using a relay discovery key set;
generating a message integrity code (MIC) for a direct discovery dataset of the second relay discovery response message using a direct discovery key set; or
generating a message integrity code (MIC) for the second relay discovery response message using a relay discovery key set.

78. The receiving apparatus of claim 76 or 77, wherein generating the second relay discovery response message based on the second relay discovery solicitation message comprises:
generating the second relay discovery response message based on a relay discovery security scheme indicated in the second relay discovery solicitation message,
wherein the relay discovery security scheme comprises one or more of the following:
using a direct discovery key set and/or a relay discovery key set to protect a relay discovery message, or not using a direct discovery key set and a relay discovery key set to protect a relay discovery message;
enabling end terminal privacy protection and/or relay terminal privacy protection, or not enabling end terminal privacy protection and relay terminal privacy protection; or
enabling integrity protection for the direct discovery dataset and/or integrity protection for a relay discovery message, or not enabling integrity protection for the direct discovery dataset and integrity protection for a relay discovery message.

79. The receiving apparatus of claim 78, wherein the second relay discovery response message comprises an identifier of the relay discovery security scheme.

80. The receiving apparatus of claim 79, wherein the relay discovery data set of the second relay discovery response message comprises the identifier of the relay discovery security scheme.

81. The receiving apparatus of claim 76 or 77, wherein the fourth receiving unit is further used for:
receiving a direct discovery key set and a relay discovery key set transmitted from a key management function.

82. A computer-readable storage medium storing a computer program, wherein the computer program is used for causing a computer to perform the transmitting method of any of claims 1 to 9.

83. A computer-readable storage medium storing a computer program, wherein the computer program is used for causing a computer to perform the transmitting method of any of claims 10 to 21.

84. A computer-readable storage medium storing a computer program, wherein the computer program is used for causing a computer to perform the receiving method of any of claims 22 to 27.
